(19) Europäisches Patentamt
European Patent Office
Office européen des brevets

(11) **EP 4 070 340 B1**

(12) **EUROPEAN PATENT SPECIFICATION**

(45) Date of publication and mention
of the grant of the patent:
**28.01.2026  Bulletin 2026/05**

(21) Application number: **20875645.2**

(22) Date of filing: **06.12.2020**

(51) International Patent Classification (IPC):
*G21C 17/108* (2006.01)      *G21D 3/00* (2006.01)

(52) Cooperative Patent Classification (CPC):
**G21C 17/108; G21D 3/001;** Y02E 30/00;
Y02E 30/30

(86) International application number:
**PCT/US2020/063519**

(87) International publication number:
**WO 2021/118894 (17.06.2021 Gazette 2021/24)**

(54) **METHOD AND APPARATUS EMPLOYING VANADIUM NEUTRON DETECTORS**

VERFAHREN UND VORRICHTUNG UNTER VERWENDUNG VON
VANADIUMNEUTRONENDETEKTOREN

PROCÉDÉ ET APPAREIL EMPLOYANT DES DÉTECTEURS DE NEUTRONS DE VANADIUM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **06.12.2019  US 201962944500 P**

(43) Date of publication of application:
**12.10.2022  Bulletin 2022/41**

(73) Proprietor: **Westinghouse Electric Company LLC
Cranberry Township, PA 16066 (US)**

(72) Inventors:
• **HEIBEL, Michael D.
Broomfield, Colorado 800211 (US)**

• **PRIBLE, Michael C.
Cranberry Township, Pennsylvania 16066 (US)**

(74) Representative: **Novagraaf Group
Chemin de l'Echo 3
1213 Onex / Geneva (CH)**

(56) References cited:
**EP-A1- 2 449 558      KR-A- 20070 081 106**

• **PIROUZMAND AHMAD ET AL: "Estimation of
relative power distribution and power peaking
factor in a VVER-1000 reactor core using artificial
neural networks", PROGRESS IN NUCLEAR
ENERGY, vol. 85, 1 November 2015 (2015-11-01),
GB, pages 17 - 27, XP055799774, ISSN:
0149-1970, DOI: 10.1016/j.pnucene.2015.06.001**

EP 4 070 340 B1

## Description

### CROSS-REFERENCE TO RELATED APPLICATIONS

This application claims the benefit of U.S. provisional Application No. 62/944,500, filed December 6, 2019 entitled "METHOD AND APPARATUS EMPLOYING VANADIUM SELF-POWERED NEUTRON DETECTORS."

### BACKGROUND

Vanadium neutron detector assemblies require a process to convert the measured detector element signals, which are in the form of detected current levels, into an equivalent neutron flux to use the measurements to produce a core power distribution measurement for the core of a nuclear reactor. The accuracy of the conversion and power distribution calculation is highly dependent on the nuclear methods used. In order to use the measured power distribution results to satisfy commercial reactor peaking factor surveillance requirements, it is necessary to perform an extensive power distribution measurement uncertainty analysis and submit the results to the NRC for review and approval. This can require multiple years of effort. This effort currently limits the application of such vanadium in-core detectors to use by a limited set of systems. This also provides a barrier to the sale of such vanadium detector assembly to installations that don't use the limited set of systems for reactor power distribution measurements.

EP 2 449 558 A1 discloses a subcritical physics testing program that utilizes vanadium self-powered incore instrumentation thimble assemblies to provide an actual measured powered distribution that is used to confirm that the core will operate as designed. Signals received from the incore detector elements are integrated until a fractional uncertainty is less than a specified level. The measured power distribution is then compared against a predicted power distribution for a given rod position or temperature difference and, if the measured power distribution is within a specified tolerance to the predicted power distribution, the core is expected to behave as predicted. Pirouzmand and Dehdashti, in Estimation of relative power distribution and power peaking factor in a VVER-1000 reactor core using artificial neural networks (Progress In Nuclear Energy, 85 (2015) pp.17-27), disclose a computational tool for predicting in real-time neutronic parameters of a VVER-1000 reactor core such as axial and radial relative power distributions (RPDs) and power peaking factor (PPF) based on an artificial neural network (ANN) framework. Ex-core neutron detector signals, some core parameters data, and a neural network are used to setup a real-time monitoring system for RPD and PPF predictions. To detect the hottest fuel assemblies (FAs), the radial RPD in the core is first monitored and then the axial relative power of those FAs is screened to detect the PPF in the core, by obtaining two hundred reactor operation states with different power density distributions. A multilayer perceptron neural network is trained by applying a set of experimental and calculated data for each core state. KR 2007 0081106 A discloses a nuclear reactor protection system, that has plural in-core gamma rays sensors, at least one in-core neutron sensors arranged to correspond to the gamma ray sensors, and a reference power distribution controller directly calculates the power distribution over the core by using the signals generated in the gamma ray sensors and the neutron sensors. The nuclear reactor protection system further includes a core inlet hole temperature sensor, a core outlet hole temperature sensor, a refrigerant flow rate detector, and a refrigerant enthalpy variation calculator

### SUMMARY

The following summary is provided to facilitate an understanding of some of the innovative features unique to the embodiments disclosed and is not intended to be a full description. A full appreciation of the various aspects of the embodiments can be gained by taking the entire specification, claims, abstract and drawings as a whole.

The methods and apparatuses described herein greatly simplify the implementation and use of vanadium neutron detector assemblies (e.g., the OPARSSEL$^{©}$ vanadium detector assemblies available from Westinghouse Electric Company, Cranberry Township, Pennsylvania, United States) with many, if not all, types of core power distribution measurement methods currently in use.

Disclosed herein is a method pertaining to a power distribution of a reactor core of a nuclear installation, the method being executed on a general purpose computer. The method comprises: measuring current values from a plurality of vanadium neutron detector assemblies which are disposed in the reactor core of the nuclear installation; determining a measured relative core power distribution based upon the measured current values comprising creating a calibration relationship between a measured total reactor relative power level, $Q_T$, and a sum of all the measured currents values from the plurality of vanadium neutron detector assemblies in instrumented radial core location $i$, $(I_1(i))$, according to the following equation:

$$Q_T = \frac{K}{N} \sum_{i=1}^{N} I_1(i)$$

where $Q_T$ is a measured total reactor relative power level calculated using the measured reactor thermal power, $K$ is a relationship between reactor thermal power and the current values from the plurality of vanadium neutron detector assemblies, $N$ is the number of the plurality of vanadium neutron detector assemblies, $i$ is the instrumented radial core location, and $I_1(i)$ is the measured current value; adjusting at least one of a predicted relative core power distribution and a model usable for predicting relative core power distribution based upon the determined measured relative core power distribution; producing a measured core power distribution based upon at least one of the adjusted predicted relative core power distribution and the adjusted model usable for predicting relative core power distribution; and verifying that the reactor core is operating within licensed core operating limits based at least in part upon the produced measured core power distribution.

In an embodiment, the determining a measured relative core power distribution comprises determining a relative fuel assembly power for at least one core fuel assembly, relative to the measured total reactor relative power level ($Q_T$) for the reactor core.

The determining a measured relative core power distribution may comprise determining, for each instrumented core fuel assembly, the relative axial power distribution for each axial region elevation.

Each of the plurality of vanadium detector assemblies may comprises a plurality of vanadium neutron detector elements of non-equal lengths, wherein each detector element runs axially from one end of a fuel assembly towards an opposite end of the fuel assembly. In an example, the plurality of vanadium detector assemblies each comprise a plurality of vanadium neutron detector elements of non-equal lengths, and each assembly comprises a full-length detector element and at least one additional detector element, running less than the full-length.

The invention also provides a nuclear installation comprising: the computer upon which are performed the operations of the above method; the nuclear reactor core; and the plurality of vanadium neutron detector assemblies situated in the core.

## BRIEF DESCRIPTION OF THE DRAWINGS

Various features of the embodiments described herein are set forth with particularity in the appended claims. The various embodiments, however, both as to organization and methods of operation, together with advantages thereof, may be understood in accordance with the following description taken in conjunction with the accompanying drawings as follows:

FIG. 1 is a schematic view a vanadium neutron detector assembly according to at least one aspect of the present disclosure.

FIG. 2 is a bar graph showing exemplary axial flux distribution at various locations of an instrumented fuel assembly of the present disclosure.

FIG. 3 is a flow chart showing an exemplary method of the present disclosure.

Corresponding reference characters indicate corresponding parts throughout the several views. The exemplifications set out herein illustrate various embodiments of the invention, in one form, and such exemplifications are not to be construed as limiting the scope of the invention in any manner.

## DETAILED DESCRIPTION

Before explaining various aspects of the present disclosure in detail, it should be noted that the illustrative examples are not limited in application or use to the details of construction and arrangement of parts illustrated in the accompanying drawings and description. The illustrative examples may be implemented or incorporated in other aspects, variations, and modifications, and may be practiced or carried out in various ways. Further, unless otherwise indicated, the terms and expressions employed herein have been chosen for the purpose of describing the illustrative examples for the convenience of the reader and are not for the purpose of limitation thereof. Also, it will be appreciated that one or more of the following-described aspects, expressions of aspects, and/or examples, can be combined with any one or more of the other following-described aspects, expressions of aspects, and/or examples.

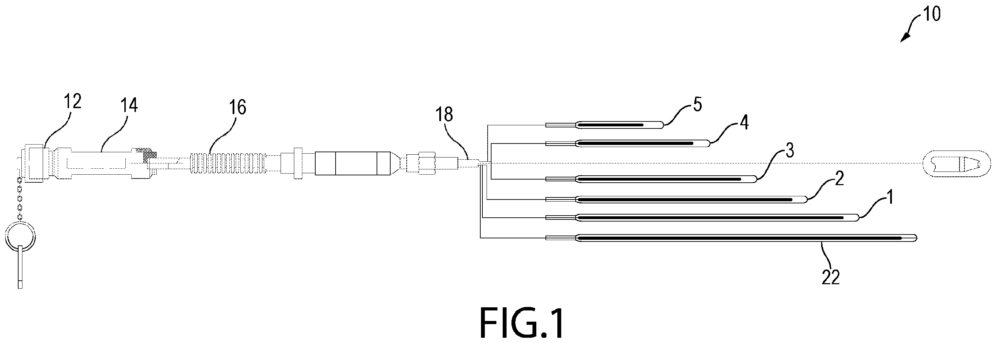

A vanadium neutron detector assembly 10 according to the present disclosure is shown in FIG. 1. The assembly 10 includes neutron detector elements 1-5, for example. The assembly 10 can be, for example, an OPARSSEL® Detector Assembly (ODA) with multiple detector elements 1-5, typically five in number, as shown in Figure 1. Nonetheless, any suitable number of detector elements can be employed such as, for example, 2, 3, 4, 5, 6, 7, 8, 9, 10, or more detector elements. The detector elements 1-5 can each be of differing lengths. In the nonlimiting example shown in FIG. 1, the vanadium detector element 1 can run the full length of the active length of the fuel assembly, which can be, for example, 144 inches (approximately 3.66 meters). As used herein, a "full-length" detector element refers to such a vanadium neutron detector element which covers the entire distance of the active length of a fuel assembly. The other detector elements (2-5) can be of lesser lengths relative to the detector element 1. For example, detector element 2 may be 80% of the length of detector element 1, detector element 3 may be 60% of the length of detector element 1, etc.

Additional details are disclosed in U.S. Patent No. 8,767,903, granted July 1, 2014, titled WIRELESS IN-CORE NEUTRON MONITOR and U.S. Patent No. 8,681,920, granted March 25, 2014, titled SELF-POWERED WIRELESS IN-CORE DETECTOR.

The subtraction of one measured detector current from another provides the equivalent of a single detector measurement in the region between the end of a longer detector element and the end of a shorter detector element as shown on Figure 1. For example, subtraction of the current measured by detector element 2 from that measured by detector element 1 provides the equivalent of a single detector measurement in the region where 1 and 2 do not overlap. The assembly 10 can further comprise a multi-pin connector 12, a connector backshell 14, flexible tubing 16, and a sheath 18. One or more of the connector backshell 14, flexible tubing 16, and the sheath 18 can comprise stainless steel. The sheath 18 can comprise the detector elements 1-5. The sheath may also house a thermocouple 22. In other embodiments, however, a thermocouple 22 may not be included.

In the Westinghouse Electric Company BEACON SYSTEM®, the nuclear methods convert a predicted neutron flux corresponding to the region covered by the detector signal differences, and convert the predicted neutron flux into a predicted detector current using an analytic relationship developed for the vanadium detector elements 1-5. The ratios of the measured and predicted currents from all the detector assemblies in a reactor core can be used to adjust the predicted reactor power distribution to produce a measured reactor power distribution used to determine whether the reactor is operated within licensed core peaking factor limits. The method used to convert the predicted neutron flux to a predicted detector current can affect the accuracy of the measured core power distribution and is based on the specific nuclear methods used.

Additional details are disclosed in U.S. Patent Publication No. 2011/0268239, published November 3, 2011, titled METHOD OF CALIBRATING EXCORE DETECTORS IN A NUCLEAR REACTOR.

A method that can be advantageously used to avoid the dependence of power distribution measurement accuracy on such nuclear methods by advantageously avoiding the need to convert predicted neutron flux distributions into detector currents is described herein.

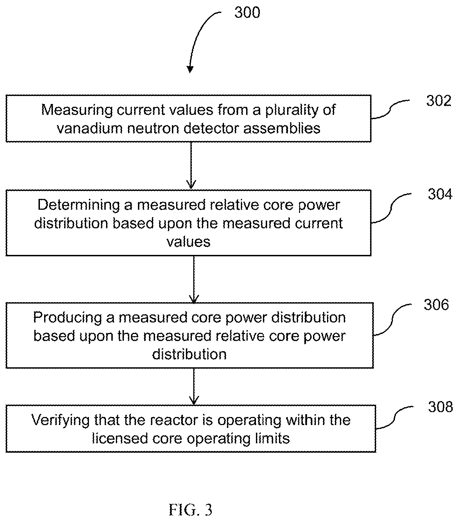

Referring to FIG. 3, the method 300 can comprise measuring 302 current values from a plurality of vanadium neutron detector assemblies. The neutron detector assemblies can be disposed in the reactor core of a nuclear installation. The method 300 can comprise determining 304 a measured relative core power distribution based upon the measured current values. The method 300 can comprise producing 306 a measured core power distribution based upon the measured relative core power distribution. The method 300 can comprise verifying 308 that the reactor is operating within the licensed core operating limits based at least in part upon the measured core power distribution. The method 300 can be executed on a general purpose computer.

In various aspects, the determining 304 can include creating a calibration relationship between measured total reactor relative power level (QT) and the sum of all the measured currents from the detector 1 elements (e.g., the full-length detector elements) in instrumented radial core location i, $(I_1(i))$. This relationship will result in the average current for all of the detectors 1 in all of the instrumented fuel cells in the core, it being noted that approximately one-third of the fuel cells in the exemplary core noted herein are instrumented with OPARSSEL-style vanadium detector assemblies, or any other suitable vanadium detector assemblies, for example. This relationship is in the following form:

$$Q_T = \frac{K}{N} \sum_{i=1}^{N} I_1(i) \qquad (1)$$

where K is the measured slope of the plot of relationship between the measured reactor relative power level ($Q_T$) and the corresponding $\sum_{i=1}^{N} I_1(i)$ . N is the number of instrumented fuel assemblies in the reactor. $Q_T$ is calculated using measured reactor thermal power (such as measured using secondary calorimetric data including flow rates, temperatures, pressures, and enthalpy changes, by way of example) divided by the maximum licensed thermal power.

The relationship between reactor thermal power and the average in-core detector output current is captured in the value of K determined in Equation 1. Equation 1 demonstrates that the value of K has a linear relationship with reactor relative power level ($Q_T$). The value of K incorporates the detector neutron sensitivity per unit length and the average relative power of the fuel assembly containing the detector element. The neutron sensitivity value is initially captured for each detector element during the manufacturing process. Manufacturing data indicates that this value is essentially equal for each detector element, although it is noted that, over time, this neutron sensitivity value decreases, meaning that for a given neutron flux value within the core, the current that is output by the detector will decrease over time. It may be desirable to update with the best estimate data once it's available. It may also be desirable to perform a calibration during power ascent from 0-50%, RTP (before power distribution is monitoring) and since the relationship is known to be linear, use the calibrations from 50-100%.

Further to the above, a relationship between the relative reactor power level and the power of any fuel assembly containing a detector assembly can be determined 304 from the detector 1 current. The process 304 can further include determining 304 the relative assembly power at core location i, $Q_R(i)$, which involves a determination of the power of the core at each instrumented fuel assembly (each of which is situated at a known location $i$ in the core) relative to the total reactor relative power level ($Q_T$), using the following expression:

$$Q_R(i) = \frac{KI_1(i)}{\frac{K}{N}\sum_{i=1}^{N} I_1(i)} \qquad (2)$$

The expression for $Q_R(i)$ may be expressed directly in terms of measured currents, i.e., without the value K, with the following equation:

$$Q_R(i) = \frac{I_1(i)}{\frac{1}{N}\sum_{i=1}^{N} I_1(i)}\mu_i \qquad (3)$$

which includes an optional correction factor $\mu_i$ that is equal to the ratio of the length of detector 1 in core location i to the average of all of the detector 1 lengths. The correction factor $\mu_i$ is unnecessary in cases where it is know that all of the detectors 1 are of the same length. Other correction factors that account for differences in detector depletion and manufacturing sensitivity can be developed in a similar manner by those skilled in the art. In this case the measured value of $Q_R(i)$ advantageously doesn't require any nuclear design data.

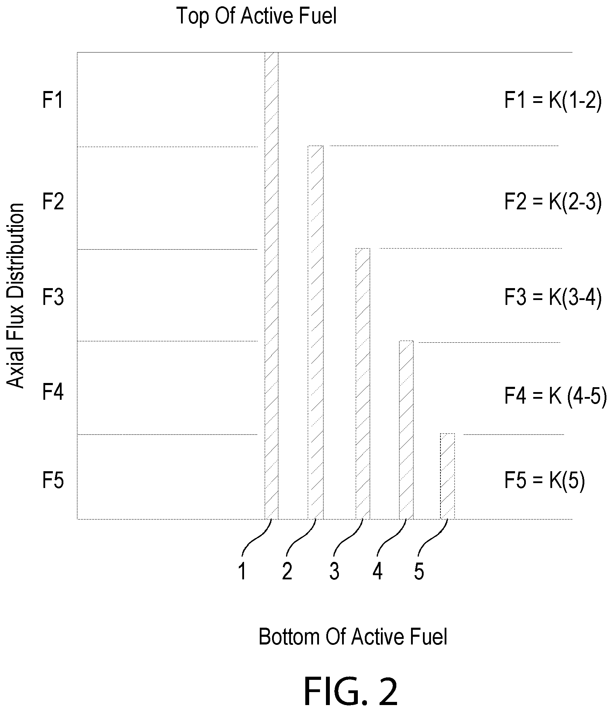

The axial relative power distribution, assuming equal detector neutron sensitivity, may be expressed as follows. For each instrumented location/asseinbly $i$ in the core, which could be referred to as a radial location within a generally circular core, the determining 304 can include determining the relative axial power distribution for each axial region elevation j, as depicted in Figure 2 as being the regions between an end of a given detector and an end of a next longest detector which will experience flux values F1, F2, etc., in each such instrumented fuel assembly i, $P_j(i)$, assuming equal values of neutron sensitivity per unit length using the following expression:

$$P_j(i) = \frac{\Delta I_j(i)}{I_1(i)}Q_R(i) \quad (j=1\text{-}5) \qquad (4)$$

The values of $\Delta I_j(i)$ represent the differences in the currents that are measured from the detectors, and which are representative of the flux values F1, F2, etc., at the locations j=1, j=2, etc., wherein:

$$\Delta I_1(i) = I_1(i) - I_2(i)$$

$$\Delta I_2(i) = I_2(i) - I_3(i)$$

$$\text{Etc.}\dots$$

Equation 4 provides an expression of how much of the power the fuel assembly i is producing at each of its vertical locations j relative to the power of the core. The measured radial and axial relative reactor power distribution data can be extrapolated to the appropriate axial nodal distribution and to the non-instrumented core locations using whatever methods are used in the current core power distribution measurement process software.

The nuclear methods that are used to calculate the measured core power distribution can advantageously instead use the measured relative core power distribution described herein to adjust a predicted relative core power distribution to produce a measured core power distribution that can be used to verify that the reactor is operating within the licensed core operating limits. This approach will greatly simplify and reduce the time and costs required to allow the ODA to be implemented by customers not using the known BEACON SYSTEM®.

The process outlined herein advantageously allows the reactor power distribution to be measured using vanadium ODA-style detectors without the need for extensive nuclear method re-licensing effort. The successful implementation of the approach described in this disclosure will enable the rapid and inexpensive Implement the ODA-style detector hardware in plants that do not use the BEACON SYSTEM®.

The improved method 300 can be executed on any general purpose computer and involves measuring 302 current values from the various vanadium detectors in a core of a nuclear installation, determining 304 a measured relative core power distribution based upon the measured current values, adjusting a predicted relative core power distribution based upon the measured relative core power distribution, and producing 308 a measured core power distribution that can be used to verify that the reactor is operating within the licensed core operating limits. The disclosed and claimed concept also includes a nuclear installation having a nuclear core and further having a computer upon which are performed steps such as measuring current values from the various vanadium detectors in a core of a nuclear installation, determining a measured relative core power distribution based upon the measured current values, adjusting a predicted relative core power distribution based upon the measured relative core power distribution, and producing a measured core power distribution that can be used to verify that the reactor is operating within the licensed core operating limits.

Unless specifically stated otherwise as apparent from the foregoing disclosure, it is appreciated that, throughout the foregoing disclosure, discussions using terms such as "processing," "computing," "calculating," "determining," "displaying," or the like, refer to the action and processes of a computer system, or similar electronic computing device, that manipulates and transforms data represented as physical (electronic) quantities within the computer system's registers and memories into other data similarly represented as physical quantifies within the computer system memories or registers or other such information storage, transmission or display devices.

One or more components may be referred to herein as "configured to," "configurable to," "operable/operative to," "adapted/adaptable," "able to," "conformable/conformed to," etc. Those skilled in the art will recognize that "configured to" can generally encompass active-state components and/or inactive-state components and/or standby-state components, unless context requires otherwise.

Those skilled in the art will recognize that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to claims containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that typically a disjunctive word and/or phrase presenting two or more alternative terms, whether in the description, claims, or drawings, should be understood to contemplate the possibilities of including one of the terms, either of the terms, or both terms unless context dictates otherwise. For example, the phrase "A or B" will be typically understood to include the possibilities of "A" or "B" or "A and B."

With respect to the appended claims, those skilled in the art will appreciate that recited operations therein fray generally be performed in any order. Also, although various operational flow diagrams are presented in a sequencers), it should be understood that the various operations may be performed in other orders than those which are illustrated, or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

It is worthy to note that any reference to "one aspect," "an aspect," "an exemplification," "one exemplification," and the like means that a particular feature, structure, or characteristic described in connection with the aspect is included in at least one aspect. Thus, appearances of the phrases "in one aspect," "in an aspect," "in an exemplification," and "in one exemplification" in various places throughout the specification are not necessarily all referring to the same aspect.

Furthermore, the particular features, structures or characteristics may be combined in any suitable manner in one or more aspects.

The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a system that "comprises," "has," "includes" or "contains" one or more elements possesses those one or more elements, but is not limited to possessing only those one or more elements. Likewise, an element of a system, device, or apparatus that "comprises," "has," "includes" or "contains" one or more features possesses those one or more features, but is not limited to possessing only those one or more features.

The terms "about" or "approximately" as used in the present disclosure, unless otherwise specified, means an acceptable error for a particular value as determined by one of ordinary skill in the art, which depends in part on how the value is measured or determined. In certain embodiments, the term "about" or "approximately" means within 1, 2, 3, or 4 standard deviations. In certain embodiments, the term "about" or "approximately" means within 50%, 20%, 15%, 10%, 9%, 8%, 7%, 6%, 5%, 4%, 3%, 2%, 1%, 0.5%, or 0.05% of a given value or range.

Any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In summary, numerous benefits have been described which result from employing the concepts described herein. The foregoing description of the one or more forms has been presented for purposes of illustration and description. It is not intended to be exhaustive or limiting to the precise form disclosed. Modifications or variations are possible in light of the above teachings. The one or more forms were chosen and described in order to illustrate principles and practical application to thereby enable one of ordinary skill in the art to utilize the various forms and with various modifications as are suited to the particular use contemplated. The following claims define the overall scope.

**Claims**

1. A method pertaining to a power distribution of a reactor core of a nuclear installation, the method being executed on a general purpose computer and comprising:

measuring (302) current values ($I_1(i)$) from a plurality of vanadium neutron detector assemblies (10) which are disposed in the reactor core of the nuclear installation;
determining (304) a measured relative core power distribution based upon the measured current values $I_1(i)$;
**characterized in that**
determining (304) the measured relative core power distribution comprises creating a calibration relationship between a measured total reactor relative power level, $Q_T$, and a sum of all the measured currents values from the plurality of vanadium neutron detector assemblies in instrumented radial core location i, ($I_1(i)$), according to the following equation:

$$Q_T = \frac{K}{N}\sum_{i=1}^{N} I_1(i) \qquad (1)$$

where

$Q_T$ is a measured total reactor relative power level, wherein $Q_T$ is calculated using the measured reactor thermal power;
$K$ is a relationship between reactor thermal power and the current values from the plurality of vanadium neutron detector assemblies (10),
N is the number of the plurality of vanadium neutron detector assemblies (10),
$i$ is the instrumented radial core location, and
$I_1(i)$ is the measured current value;
adjusting at least one of a predicted relative core power distribution and a model usable for predicting relative core power distribution based upon the determined measured relative core power distribution;
producing (306) a measured core power distribution based upon at least one of the adjusted predicted relative core power distribution and the adjusted model usable for predicting relative core power distribution; and

verifying (308) that the reactor core is operating within licensed core operating limits based at least in part upon the produced measured core power distribution.

2. The method of claim 1, wherein the determining a measured relative core power distribution comprises determining a relative fuel assembly power for at least one core fuel assembly, relative to the measured total reactor relative power level ($Q_T$) for the reactor core.

3. The method of either claim 1 or 2, wherein the determining a measured relative core power distribution comprises determining, for each instrumented core fuel assembly, the relative axial power distribution for each axial region elevation.

4. The method of any one of claims 1 to 3, wherein each of the plurality of vanadium detector assemblies (10) comprises a plurality of vanadium neutron detector elements (1-5) of non-equal lengths, and wherein each detector element (1-5) runs axially from one end of a fuel assembly towards an opposite end of the fuel assembly.

5. The method of claim 4, wherein the plurality of vanadium detector assemblies (10) each comprise a plurality of vanadium neutron detector elements (1-5) of non-equal lengths, and wherein each assembly (10) comprises a full-length detector element (1) and at least one additional detector element (2-5), running less than the full-length.

6. A nuclear installation comprising:

the computer upon which are performed the operations of any one of Claims 1 to 5;
the nuclear reactor core; and
the plurality of vanadium neutron detector assemblies (10) situated in the core.

**Patentansprüche**

1. Verfahren, betreffend eine Leistungsverteilung eines Reaktorkerns einer Kernkraftanlage, wobei das Verfahren auf einem Universalcomputer ausgeführt wird und umfassend:

Messen (302) von Stromwerten ($I_1(i)$) aus einer Vielzahl von Vanadium-Neutronendetektoranordnungen (10), die in dem Reaktorkern der Kernkraftanlage angeordnet sind;
Bestimmen (304) einer gemessenen relativen Kernleistungsverteilung basierend auf den gemessenen Stromwerten $I_1(i)$;
**dadurch gekennzeichnet, dass**
das Bestimmen (304) der gemessenen relativen Kernleistungsverteilung ein Erstellen einer Kalibrierungsbeziehung zwischen einem gemessenen relativen Gesamtleistungspegel des Reaktors, $Q_T$, und einer Summe all der gemessenen Stromwerte aus der Vielzahl von Vanadium-Neutronendetektoranordnungen in instrumentierter radialer Kernposition $i$, ($I_1(i)$), gemäß der folgenden Gleichung umfasst:

$$Q_T = \frac{K}{N} \sum_{i=1}^{N} I_1(i) \qquad (1)$$

wobei

$Q_T$ ein gemessener relativer Gesamtleistungspegel des Reaktors ist, wobei $Q_T$ unter Verwendung der gemessenen thermischen Leistung des Reaktors berechnet wird;
K eine Beziehung zwischen der thermischen Leistung des Reaktors und den Stromwerten der Vielzahl von Vanadium-Neutronendetektoranordnungen (10) ist,
N die Anzahl der Vielzahl von Vanadium-Neutronendetektoranordnungen (10) ist,
$i$ die instrumentierte radiale Kernposition ist und
$I_1(i)$ der gemessene Stromwert ist;
Anpassen mindestens eines von einer vorhergesagten relativen Kernleistungsverteilung und einem Modell, das zum Vorhersagen der relativen Kernleistungsverteilung verwendbar ist, basierend auf der bestimmten gemessenen relativen Kernleistungsverteilung;

Erzeugen (306) einer gemessenen Kernleistungsverteilung basierend auf mindestens einem von der angepassten vorhergesagten relativen Kernleistungsverteilung und dem angepassten Modell, das zum Vorhersagen der relativen Kernleistungsverteilung verwendbar ist; und

Überprüfen (308), dass der Reaktorkern innerhalb zugelassener Kernbetriebsgrenzen betrieben wird, basierend mindestens teilweise auf der erzeugten gemessenen Kernleistungsverteilung.

2. Verfahren nach Anspruch 1, wobei das Bestimmen einer gemessenen relativen Kernleistungsverteilung das Bestimmen einer relativen Brennstoffanordnungsleistung für mindestens eine Kernbrennstoffanordnung relativ zu dem gemessenen relativen Gesamtleistungspegel des Reaktors ($Q_T$) für den Reaktorkern umfasst.

3. Verfahren nach Anspruch 1 oder 2, wobei das Bestimmen einer gemessenen relativen Kernleistungsverteilung das Bestimmen, für jede instrumentierte Kernbrennstoffanordnung, der relativen axialen Leistungsverteilung für jede axiale Bereichshöhe umfasst.

4. Verfahren nach einem der Ansprüche 1 bis 3, wobei jede der Vielzahl von Vanadium-Detektoranordnungen (10) eine Vielzahl von Vanadium-Neutronendetektorelementen (1-5) ungleicher Länge umfasst und wobei jedes Detektorelement (1-5) axial von einem Ende einer Brennstoffanordnung zu einem gegenüberliegenden Ende der Brennstoffanordnung verläuft.

5. Verfahren nach Anspruch 4, wobei die Vielzahl von Vanadium-Detektoranordnungen (10) jeweils eine Vielzahl von Vanadium-Neutronendetektorelementen (1-5) ungleicher Länge umfasst und wobei jede Anordnung (10) ein Detektorelement (1) voller Länge und mindestens ein zusätzliches Detektorelement (2-5) umfasst, das kürzer als die volle Länge ist.

6. Kernkraftanlage, umfassend:

den Computer, auf dem die Betriebe nach einem der Ansprüche 1 bis 5 durchgeführt werden;
den Kernkraftreaktorkern; und
die Vielzahl von Vanadium-Neutronendetektoranordnungen (10), die sich in dem Kern befinden.

**Revendications**

1. Procédé relatif à une distribution de puissance d'un cœur d'un réacteur d'une installation nucléaire, le procédé étant exécuté sur un ordinateur à usage général et comprenant :

la mesure (302) de valeurs de courant ($I_1(i)$) provenant d'une pluralité d'ensembles détecteurs de neutrons de vanadium (10) disposés dans le cœur d'un réacteur de l'installation nucléaire ;
la détermination (304) d'une distribution de puissance du cœur relative mesurée sur la base des valeurs de courant mesurées $I_1(i)$ ;
**caractérisé en ce que**
la détermination (304) de la distribution de puissance du cœur relative mesurée comprend la création d'une relation d'étalonnage entre un niveau de puissance relative totale du réacteur mesuré, $Q_T$, et une somme de toutes les valeurs de courants mesurées à partir de la pluralité d'ensembles détecteurs de neutrons de vanadium à un emplacement du cœur radial instrumenté $i$, ($I_1(i)$), selon l'équation suivante :

$$Q_T = \frac{K}{N}\sum_{i=1}^{N} I_1(i) \qquad (1)$$

où

$Q_T$ est un niveau de puissance relative totale du réacteur mesuré, dans lequel $Q_T$ est calculé à l'aide de la puissance thermique du réacteur mesurée ;
K est une relation entre la puissance thermique du réacteur et les valeurs de courant provenant de la pluralité d'ensembles détecteurs de neutrons de vanadium (10),
N est le nombre de la pluralité d'ensembles détecteurs de neutrons de vanadium (10),
$i$ est l'emplacement du cœur radial instrumenté, et

$I_1(i)$ est la valeur de courant mesuré ;

l'ajustement d'au moins l'une parmi une distribution de puissance du cœur relative prédite et un modèle utilisable pour prédire la distribution de puissance du cœur relative sur la base de la distribution de puissance du cœur relative mesurée déterminée ;

la production (306) d'une distribution de puissance du cœur mesurée sur la base d'au moins l'une parmi une distribution de puissance du cœur relative prédite ajustée et le modèle ajusté utilisable pour prédire la distribution de puissance du cœur relative ; et

la vérification (308) que le cœur d'un réacteur fonctionne dans les limites autorisées de fonctionnement du cœur, sur la base au moins en partie de la distribution de puissance du cœur mesurée produite.

2. Procédé selon la revendication 1, dans lequel la détermination d'une distribution de puissance du cœur relative mesurée comprend la détermination d'une puissance d'ensemble combustible relative pour au moins un ensemble combustible du cœur, par rapport au niveau de puissance relative totale du réacteur ($Q_T$) mesuré pour le cœur d'un réacteur.

3. Procédé selon la revendication 1 ou 2, dans lequel la détermination d'une distribution de puissance du cœur relative mesurée comprend la détermination, pour chaque ensemble combustible du cœur instrumenté, de la distribution de puissance axiale relative pour chaque élévation de région axiale.

4. Procédé selon l'une quelconque des revendications 1 à 3, dans lequel chacun de la pluralité d'ensembles détecteurs de vanadium (10) comprend une pluralité d'éléments de détecteur de neutrons de vanadium (1-5) de longueurs non égales, et dans lequel chaque élément de détecteur (1-5) s'étend de manière axiale d'une extrémité d'un ensemble combustible vers une extrémité opposée de l'ensemble combustible.

5. Procédé selon la revendication 4, dans lequel la pluralité d'ensembles détecteurs de vanadium (10) comprend chacun une pluralité d'éléments de détecteur de neutron de vanadium (1-5) de longueurs non égales, et dans lequel chaque ensemble (10) comprend un élément de détecteur de pleine longueur (1) et au moins un élément de détecteur supplémentaire (2-5), d'une longueur inférieure à la longueur totale.

6. Installation nucléaire comprenant :

l'ordinateur sur lequel sont effectuées les opérations selon l'une quelconque des revendications 1 à 5 ;
le cœur d'un réacteur nucléaire ; et
la pluralité d'ensembles détecteurs de neutron de vanadium (10) situés dans le cœur.

**FIG.1**

Top Of Active Fuel

F1 = K(1-2)

F2 = K(2-3)

F3 = K(3-4)

F4 = K (4-5)

F5 = K(5)

Axial Flux Distribution

F1

F2

F3

F4

F5

1    2    3    4    5

Bottom Of Active Fuel

# FIG. 2

300

Measuring current values from a plurality of vanadium neutron detector assemblies — 302

Determining a measured relative core power distribution based upon the measured current values — 304

Producing a measured core power distribution based upon the measured relative core power distribution — 306

Verifying that the reactor is operating within the licensed core operating limits — 308

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62944500
- EP 2449558 A1
- KR 20070081106 A
- US 8767903 B
- US 8681920 B
- US 20110268239 A

**Non-patent literature cited in the description**

- **PIROUZMAND** ; **DEHDASHTI**. Estimation of relative power distribution and power peaking factor in a VVER-1000 reactor core using artificial neural networks. *Progress In Nuclear Energy*, 2015, vol. 85, 17-27